# EUROPEAN PATENT SPECIFICATION

(11) **EP 0 542 669 B1**
(45) Date of publication and mention of the grant of the patent: **16.04.1997**
(21) Application number: 92810747.3
(22) Date of filing: 05.10.1992
(51) Int. Cl.: C09B 67/02, C08K 5/00

(54) **Process for the manufacture of pigments, especially fluorescent pigments**
Verfahren zur Herstellung von Pigmenten, insbesondere fluoreszierenden Pigmenten
Procédé pour la manufacture de pigments, spécialement de pigments fluorescents

(30) Priority: 04.11.1991 EP 91402945
(43) Date of publication of application: 19.05.1993
(73) Proprietor: SOCIETE NOUVELLE DE CHIMIE INDUSTRIELLE S.A., F-74490 Saint-Jeoire-en-Faucigny (FR); Ciba Specialty Chemicals Holding Inc., 4057 Basel (CH)
(72) Inventor: Marcq, Michel Jean Marcq, F-60700 St-Martin Longueau (FR); Tanner, Martin, Dr., CH-1734 Tentlingen (CH)

(56) References cited:
- EP-A- 0 051 038
- EP-A- 0 133 156
- EP-A- 0 224 445
- EP-A- 0 422 474
- FR-A- 2 033 410
- FR-A- 2 253 794
- GB-A- 1 383 051

## Description

The present invention relates to a process for the manufacture of pigments, especially a process for the manufacture of fluorescent pigments, and to certain pigments prepared.

It is known that when coloured substances are subjected to polychromatic radiation such as, for example, daylight, they have the property of reflecting, transmitting or scattering only certain wavelengths and of absorbing the remainder of the luminous energy, which is dissipated by nonradiative processes. So-called daylight-fluorescent substances have the additional property of converting a proportion of the radiation absorbed at the blue end of the visible spectrum and in the near UV into light which is reemitted at longer wavelengths, also situated in the visible spectrum and equal to those of the light which these substances do not absorb. Through this process, they are capable of producing in the observer's eye an impression of colour and of brightness which is up to four times greater than that of ordinary coloured substances of the same colour. It is also known that the intensity of the emitted fluorescent light is extremely sensitive to so-called fluorescence extinction phenomena and that it is a function especially of the concentration of the fluorescent substance itself (autoextinction phenomenon) and of the possible presence of other substances known as fluorescence inhibitors (which act, for example, by reabsorbing the emitted light or by nonradiative quantum deexcitation processes).

In most applications of colourants (for example paper coating, textile printing, plastic coatings) the colourant molecules must be prevented from migrating, diffusing or redissolving in a solvent. In the case of fluorescent colourants, furthermore, the fluorescence intensity is at a maximum (low autoextinction) in a precise concentration range and, if the other causes of extinction of fluorescence are to be limited, the colourant matter must be protected in an inert but transparent optical medium. A rigid polymer matrix in which the colourant molecule is soluble (solid solution) or dispersible meets these requirements of isolation, confinement and immobilisation. These coloured polymers are employed in most cases in the form of finely ground particles, generally referred to as pigments.

The polymers employed for manufacturing fluorescent pigments belong to the classes of thermoplastic and thermosetting resins. Among those most commonly employed are aminoplastic resins resulting from the polycondensation of triazines, amines and formaldehyde. Other polymers, such as polyesters, polyamides and polyurethanes and polyvinyl chlorides can also form the carrier for colourant molecules. Depending on the degree of crosslinking obtained during the polymerisation, these resins are either thermoset or thermoplastic. Thermoset resins are employed in cases where good resistance to solvents and to plasticisers is required (absence of swelling and of colourant diffusion) and when softening under the effect of heat could create problems.

In known processes for the manufacture of these thermoset resins the above mixture is polycondensed in bulk, in non-continuous batches. Such processes are described e.g. in US 3,812,051. On the average the reaction takes 2 hours, per batch, in the reactor. After complete polymerisation a hard, tough solid is obtained, whose texture often resembles that of horn. This solid must be taken out of the polymerisation reactor as a block. This can prove difficult and it is often preferred to complete the reaction by casting the reacting mass, which is still pasty, into troughs and finishing the polymerisation in an oven. The blocks are then crushed and then micronised. The micronisation of this solid presents some difficulties: it requires a pregrinding before a fine microniser is fed, it being necessary for the two items of equipment to be cleaned after each batch. Such conventional processes for the manufacture are also described in Chem. Brit., 335 (1977). The US 3,972,849 proposes the use of known grinding equipment, such as a ball mill, as the reaction vessel in an attempt to avoid the disadvantages of the conventional manufacturing process.

The inconvenience of the conventional manufacturing processes and the disadvantages of the pigment particles obtained by these processes have led some manufacturers, on the other hand, to prefer the manufacture and the use of pigments based on thermoplastic resins each time that a high solvent and temperature resistance is not essential. These fusible, and hence heat-sensitive, resins do not lend themselves well to simple micronising by milling and hence to the manufacture of pigments of a fine and well-determined particle size. These resins generally require an additional stage of manufacture (dispersion, phase separation) to obtain pigment particles of well-determined particle size.

The disadvantages of the two types of processes described above are avoided in the manufacture of polyester alkyd resins to which the colourant is attached by affinity. Such a process is described for example in GB 786,678 or in GB 733,856. However, the applications of such pigments are in practice limited to inks and paints, because the colourant molecules are bound to the condensates only by affinity.

The objective of the present invention is to manufacture pigments comprising a coloured composition incorporated in a resin which isolates, confines and immobilises the coloured composition, which pigments withstand the action of heat or of solvents, while avoiding the disadvantages of the processes of the prior art and especially the crushing and the difficulties of micronisation.

This objective is attained by a process for the manufacture of pigments comprising a coloured composition incorporated in a polycondensation resin said resin not containing aldehyde derivatives, especially formaldehyde derivatives, wherein the reactants for the formation of said polycondensation resin and the coloured composition are introduced continuously into a reactor and are mixed, the mixture travels forward in the reactor and at the end of reaction the product is withdrawn continuously from the said reactor.

Particularly suitable polycondensation resins to be used according to the instant invention are products which are inelastic, non-fiber-forming and brittle and which consequently may easily be converted into particulate form. The resins should moreover have a relatively high softening point, preferably of more than about 100°C, becauseotherwise at the temperatures which arise during milling the particles of resin may agglomerate and stick together. The resins should also have little or no solubility in the solvents conventionally used in processing, such as e.g. painters'naphtha, toluene and xylenes and also should not swell in these solvents. Furthermore, the resins should exhibit good transparency and adequate fastness to light. Resins meeting these requirements are generally known, and some of them have already been used for the preparation of daylight fluorescent pigments.

The polycondensation resins to be prepared and used according to the instant process do not contain aldehyde derivatives, especially formaldehyde derivatives. In particular they do not encompass the resins obtained by continuous bulk polycondensation of particular aromatic sulfonamides with compounds such as melamine and aldehydes, such as formaldehyde, which are described in the copending EP-A 456,610 which has not been published prior to the priority date of the instant application.

Examples of suitable polycondensation resins are i.a. polyamide resins, polyester resins, polycarbonates or polyurethanes. Other suitable resins are polyester/polyamide resins prepared by the reaction of aminoalcohols or aminophenols with polycarbocylic acids, such as the resins described in US 4,975,220.

Particularly suitable polycondensation resins are polyester resins and especially polyamide resins.

Among the preferred resins are crosslinked polyester resins from aromatic polycarboxylic acids or their anhydrides, particularly aromatic dicarboxylic and tricarboxylic acids, such as phthalic acid, isophthalic acid or trimellitic acid, and bifunctional or polyfunctional alcohols, such as ethylene glycol, glycerol, pentaerythritol, trimethylolpropane and neopentyl glycol. Especially preferred are polyester resins from phthalic anhydride and pentaerythritol. Such preferred polyester resins are described for example in DE 961,575 or in the above mentioned US 3,972,849.

Other preferred polyester resins are partially crystalline thermoplastic opaque polyester resins which have a substantial numer of amorphous regions and which contain from 35 to 95 equivalent % of crystallinity-producing monomers and from 5 to 65 equivalent % of amorphous producing monomers. Such resins and their use for the preparation of fluorescent pigments are described in EP-A 489,482, especially on page 2, line 57 through page 4, line 40.

Other preferred polycondensation resins to be prepared and used according to the invention are polyamide resins formed by the reaction of a polyfunctional amine with both a polycarboxylic acid and a monocarboxylic acid, said polyamide being in the molecular weight range from about 400 to about 2500. Such polyamide resins are substantially linear and have at least one carboxy group remaining on the majority of molecules, which permits a thermoplastic resin to be formed which is extremely friable and grindable. The monocarboxylic acid may be added as such or may be formed in situ by reacting a monoamine and a dicarboxylic acid in sufficient quantity to form the desired corresponding monocarboxylic co-condensate to function as a terminator and control the molecular weight of the resin formed. Optionally, whether or not a monocarboxylic acid is added as such, or is formed in situ, a sufficient amount of stabilizing compound of an element from Groups IIA and IIB may be added to further stabilize the pigment. Such preferred polyamide resins are described in the US 3,915,884.

Preferred polyfunctional amines for the preparation of the instant polyamide resins are polyfunctional, preferably difunctional, primary amines. Particularly preferred are polyfunctional alicyclic primary amines, which form the most friable resins. Most preferred is isophorone diamine (1-amino-3-aminomethyl-3,5,5-trimethyl cyclohexane). Other suitable amines are aliphatic amines having an aromatic ring, such as the m- and p-xylylene diamines; aliphatic polyfunctional primary amines, such as ethylene diamine, diethylene triamine and the like.

Preferred monocarboxylic aromatic acids are benzoic acid and substituted benzoic acids, such as p-toluic, o-toluic, and 4-methoxy benzoic acid.

Preferred aromatic polycarboxylic acids are those which have carboxy groups on noncontiguous carbon atoms, such as isophthalic acid, terephthalic acid, trimesic acid and dicarboxy and tricarboxy naphthalene.

Other preferred polyamide resins are prepared by reaction of a diamine with an excess stoichiometric amount of a diacid. Such resins are described in US 5,094,777, especially in column 2, line 13 through column 4, line 22.

When a stabilizing compound of elements in Group IIA and Group IIB of the periodic table of elements is used, such compounds should preferably be compatible with the co-condensate and the colouring material. Suitable compounds are e.g. oxides, carbonates or organic acid salts of Group II elements, such as magnesium oxide, magnesium carbonate, zinc oxide, zinc stearate, calcium hydroxide and the like. Zinc oxide is preferred.

Other preferred polycondensation resins to be prepared and used according to the invention are epoxide resins based on bisphenol-A diglycidyl ethers and crosslinked with polyhydric phenols, such as bisphenol-A, with polycarboxylic acid anhydrides, with Lewis acids and particularly with dicyandiamides and related compounds; hybrid polyesters, such as solid saturated polyester resins having free carboxyl groups and being crosslinked with epoxide resins; polyesters, such as solid saturated polyesters having free carboxyl groups and being crosslinked with triglycidylisocyanurate (TGIC); polyurethanes, such as solid saturated polyesters with free hydroxyl groups being crosslinked with polyisocyanates.

The polycondensation resins to be used according to the instant invention may, if appropriate, also contain other stabilizing compounds, such as UV-adsorbers or light stabilizers as e.g. the hindered amine light stabilizers (HALS). Such stabilizers are well known in the art.

The US 3,915,884 and US 5,094,777 disclose, as mentioned above, the preferred polyamides and their use for the manufacture of fluorescent pigments. However, according to that reference the resins are synthesized in a non-continuous batch process over a prolonged period of time. Such a process is characterized by all the disadvantages discussed above for similar prior art processes.

Surprisingly, with the process of the instant invention a much faster, simpler and more convenient synthesis of the above polycondensation resins and of the pigments, particularly fluorescent pigments, is provided.

The pigments according to the invention comprise preferably at least one substance which is fluorescent in daylight, the preferred concentration of said substance being between 1 % and 5 % by weight of the pigments. When non-fluorescent dyes, e.g. solvent dyes are used, the preferred concentration may be up to 10 % by weight of the pigments.

Colourants capable of forming a solid solution in a resin and capable of fluorescing in daylight are furthermore known and are, in general, listed in the Colour Index. Rhodamines, coumarines, xanthenes, perylenes and naphthalimides will be mentioned by way of example, no limitation being implied. Examples of appropriate colourants are also compounds described in GB 1,341,602, US 3,939,093, US 3,812,051, DE 3,703,495 and in EP-A 422,474.

Other suitable colourants are diketo-pyrrolo-pyrroles (DPP), especially those which are soluble or at least partially soluble in the resins used. Such DPP compounds are known and are described e.g. in US 4,415,685; US 4,810,802; US 4,579,949 and especially in US 4,585,878.

Preferred DPP colourants are compounds of the formula I 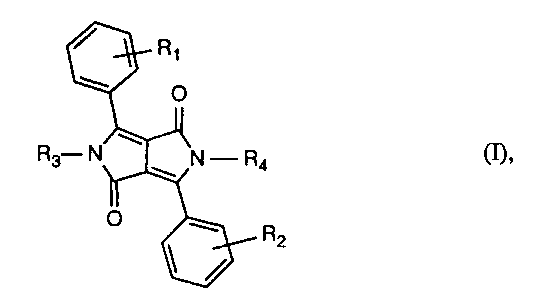 wherein R₁ and R₂ independently of one another are hydrogen, C₁-C₁₈alkyl, C₁-C₄alkoxy, phenyl, cyano or halogen and R₃ and R₄ independently of one another are hydrogen, C₁-C₁₈alkyl, C₃-C₁₂alkenyl, C₃-C₅alkinyl, C₂-C₅alkoxycarbonyl, carbamoyl, C₂-C₁₃alkylC₁-C₄alkoxycarbonyl, phenyl or phenyl substituted by chlorine, bromine, C₁-C₄alkyl, C₁-C₄alkoxy, trifluoromethyl or nitro. The substituents R₁ and R₂, if any, in each of the phenyl rings are preferably in the 3-position, most preferably in the 4-position. The alkyl and alkoxy groups, respectively can be straight chain or branched, such as methyl, ethyl, n- and isopropyl, n-, sec-, tert- and isobutyl etc. C₃-C₁₂alkenyl can be e.g. allyl, methallyl, 2-butenyl, 2-hexenyl, 3-hexenyl, 2-octenyl or 2-dodecenyl and C₃-C₅alkinyl e.g. propargyl, 1-butinyl, 2-butinyl or n-1-pentinyl. Particularly preferred are compounds of formula I, wherein R₁ and R₂ are hydrogen, 4-chloro or 4-tert-butyl and wherein R₃ and R₄ are hydrogen, methyl or 4-chlorophenyl. Also preferred are solubilizing groups R₁ to R₄.

When the above DPP compounds are used as colourants, the preferred concentration of said compounds is in the range of 0.01 - 5%, particularly 0.1 - 1%, by weight of the pigments.

Surprisingly, the pigments obtained when DPP colourants are used, are characterized by an unexpectedly increased light stability, when compared to the above soluble DPP colourants as such (i.e. not incorporated in a polycondensation resin according to the invention), and even more so when compared to the pigments obtained by using the other non DPP colourants defined above.

The compositions obtained by incorporating the above DPP colourants into the preferred polycondensation resins defined above are new. Consequently, another object of the invention are compositions comprising a diketo-pyrrolo-pyrrole colourant and a polycondensation resin selected from the group of crosslinked polyester resins from aromatic polycarboxylic acids or their anhydrides, particularly aromatic dicarboxylic and tricarboxylic acids, and bifunctional or polyfunctional alcohols, such as resins from phthalic anhydride and pentaerythritol, and polyamide resins formed by the reaction of a polyfunctional amine with both a polycarboxylic acid and a monocarboxylic acid, said polyamide being in the molecular weight range from about 400 to about 2500 and polyamide resins which are formed by reacting a diamine with an excess stoichiometric amount of diacid, said composition having a particle size of between 0.5 and 20 µm and preferably a mean particle size of between 3 and 7 µm. Preferred such polyester or polyamide resins are defined above.
The above compositions according to the invention can be prepared by mixing the reactants for the formation of said polycondensation resin and the DPP colourant in a reaction vessel and, if appropriate, heating the mixture obtained at a temperature of between 100° C and 280° C, preferably at a temperature of between 170° C and 280° C, until the polycondensation resin is formed. The above process for the preparation is another object of the instant invention. The brittle polycondensation resin comprising the DPP colourant can then be micronised to the desired pigment particle size in any general manner known to the person skilled in the art. The viscous mixture obtained after the condensation reaction can for example be poured into a shallow pan, and after cooling down and solidifying it can be broken up into flake size particles and subsequently micronised.

The present invention is particularly adapted to the manufacture of daylight fluorescent pigments, that is to say pigments whose coloured composition comprises one or more substances which are fluorescent in daylight and/or optionally one or more common coloured substances. However, it is not limited to pigments of this type: by including in a resin according to the invention a compound which does not absorb in the visible but which fluoresces when it is excited by UV radiation, "transparent" pigments are obtained, which can be employed for particular applications such as invisible inks.
The pigments of the invention are suitable for a wide variety of applications, such as paper coating, textile printing, preparation of paints, plastisols, pastes, inks, markers, toners for non-impact printing or cosmetics.
The instant pigments are characterized by high heat stability and high light stability. Therefore they are particularly suitable for the mass coloration of polymers, particularly of those thermoplastic polymers in which the instant pigments can easily be dispersed. Suitable such polymers are e.g. polyesters, polyamides, PVC-polymers, ABS-polymers, styrenics, acrylics or polyurethanes. Particularly suitable polymers are polyolefins, especially polyethylene or polypropylene. It is particularly convenient to use the instant pigments for the preparation of fluorescent polymer, especially polyolefin masterbatches. The instant pigments, particularly those prepared with basic dyes or with solvent dyes, can also advantageously be used in printing inks, e.g. for textile printing.

The present invention also makes it possible to manufacture common, nonfluorescent coloured pigments.

The concentration of the fluorescent substances in the mixture which is to be polycondensed may be adjusted so that the intensity of fluorescence is maximised. After polycondensation and micronisation the local microconcentration of fluorescent substances dissolved in the polymeric matrix remains constant whatever the subsequent overall dilution of the pigment powder, according to its use.

In the continuous process according to the present invention the polycondensation of the reaction mixture is preferably performed in a temperature range lying between 100°C and 280°C, preferably between 170°C and 280°C, especially preferred between 190°C and 260°C.

The continuous polycondensation process is carried out in a particularly convenient and simple manner, wherein the coloured composition and the reactants for the formation of the polycondensation resin are introduced continuously into a reactor, are melted and mixed, the mixture travels forward in the reactor and at the end of reaction the mixture is continuously withdrawn in a pasty state from the said reactor. The residence time of the mixture in the reactor is less than 10 min; on the average it is 1-4 minutes, particularly 2-3 minutes.

This process period which is short, when compared with the processes of the prior art (i.e. minutes vs. several hours) offers the additional advantage of making it possible to include in the resin matrix heat-sensitive coloured substances and compositions (on condition that they withstand being heated to the reaction temperature for a few minutes), which would have been destroyed in the processes of the prior art.

Another advantage of the process according to the present invention is that it is possible to cast or drop the mixture at the end of reaction onto a conveying device on which it breaks up, cools and forms brittle flakes, and this makes it possible to do without a stage of crushing a solidified reaction mass. The flakes thus formed can be easily detached from the conveying device and are easy to micronise after cooling. The flakes are preferably micronised to a particle size of between 0.5 and 20 µm. The particularly preferred mean particle size is between 3 and 7 µm. An extruder has been found particularly suited as a reactor for implementing the process according to the present invention. In a particularly preferred manner use is made of an extruder whose endless screw is responsible both for mixing the components and propelling the reaction mixture in the reactor, and also for its extrusion. It is particularly advantageous to recover the reaction mixture at the outlet of the extruder on a conveyor belt which has means for cooling and means for detaching the said flakes from the said belt. The conveyor belt may be e.g. cooled by air or by water. The mixture leaving the extruder in the form of a pasty lace breaks up on the conveyor belt into droplets which spread and cool, forming flakes. At the other end of the conveyor belt these flakes are easily detached from the belt and are taken to the micronisation.

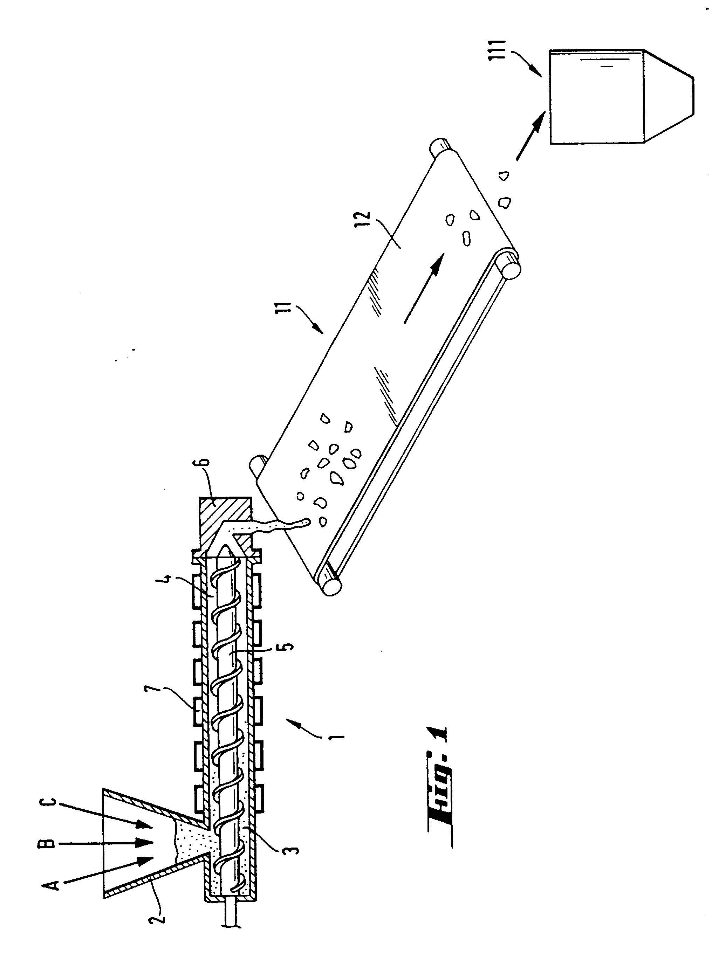

The characteristics and the advantages of the present invention will be understood better with the aid of the process diagram (Fig. 1) and of the examples below.

Example 1: Manufacture of coloured mixtures
A range of shades extending from yellow to orange shades and to red can be produced by mixing e.g. the following colourants, listed in the Colour Index:
Solvent yellow 43
Solvent yellow 44 (C. I. No. 56200)
Solvent yellow 172
Basic yellow 13
Basic yellow 19
Basic yellow 45
Basic red 1 (rhodamine 6G, C. I. No. 45160)
Basic violet 10 (rhodamine B , C.I.No. 45170)
Basic blue 7 (C.I.No. 42595)
Pigment green 7 (C.I.No. 74260).
Pinks and mauves can be produced from rhodamine mixtures; in the case of mauve, the latter may be obtained e.g. by tinting basic violet 10 with basic blue (in small quantity, to minimise the fluorescence extinction). Green shades can be obtained with the aid of e.g. pigment green 7 and of yellow colourants.
A fluorescent whitening agent may be added.

Example 2: Manufacture of coloured polyester resin flakes
A mixture comprising, by weight, 68.5 % of phthalic anhydride (flakes), 30.6 % of pentaerythritol and 0.9 % of rhodamine B is introduced (overall flow rate 30 kg/hour) via the feed hopper (2) of an extruder (1) of coaxial type. The internal temperature of the compression zone (3) and of the extrusion zone (4) of the extruder are maintained in a temperature range of 190 to 260° C (heater elements 7). The components of the reaction mixture are mixed with the aid of an extrusion screw (5) with a cylindrical core, which propels them through the compression zone. The average residence time, from the feed hopper to the extrusion head, is 2 min. An extrusion head (6) for solid beam profiles can be employed. The extruded pasty lace falls, breaking up, onto a conveyor (11) with a water-cooled endless belt (12). The resin forms flakes on the belt and solidifies while it reaches its end.

Example 3: Flake micronisation
The flakes recovered at the end of the belt are fed into a mill ( 111) of the air jet microniser type. The operating conditions are: dry air at 7 bars, room temperature, 20 kg/hour flow rate. The average particle size of the pigments obtained depends on the flow rate and ranges from 1 to 15 µm for more than 99 % of the micronised material.

Example 4: Manufacture of coloured polyamide flakes and their micronisation
According to the process of examples 2 and 3, a fluorescent yellow pigment is prepared from a mixture having 35.3 % by weight of isophorone diamine, 34.5 % by weight of isophthalic acid, 25.3 % by weight of benzoic acid, 3.3 % by weight of zinc oxide and 1.6 % by weight of Hostasol® Yellow 3G (Hoechst AG; solvent yellow 98, C.I. No. 56238).

Example 5: Preparation of a masterbatch
A fluorescent pink pigment composition called masterbatch (cylindrical granulate forms - length: 5 mm-diameter: 2 mm) is obtained by including 30 parts of pink fluorescent polyester pigment of example 2 and micronised as described in example 3 in 70 parts of a polyethylene mixture composed of 32 parts of low density polyethylene (Escorene® 600 BA G20; Exxon Chemicals), 32 parts of low density polyethylene (Escorene® 6201 RQ G50; Exxon Chemicals), 5 parts of polyethylene wax AC 540® Allied Chemical Co.) and 1 part of zinc stearate, and passing said mixture through an extruder at 155 ° C. The filaments obtained are cooled at room temperature and passed through a grind-mill.

Example 6: Preparation of a masterbatch
A fluorescent yellow pigment composition called masterbatch is obtained as described in example 5 above by using 30 parts of the yellow fluorescent polyamide pigment prepared in example 4 and micronised as described in example 3.

Examples 7 - 9: Manufacture of coloured polyamide flakes and their micronisation Example 7: According to the process of Examples 2 and 3 a fluorescent pink pigment is prepared from a mixture having 14.9 % by weight of benzoic acid, 41.5 % by weight of isophorone diamine, 40.5 % by weight of isophthalic acid and 3.1 % by weight of Flexo red 540 (BASF AG; rhodamine B, C.I. No. 45170).

Example 8: According to the process of Examples 2 and 3 a fluorescent yellow pigment is prepared from a mixture having 10.5 % by weight of benzoic acid, 43.7 % by weight of isophorone diamine, 42.7 % by weight of isophthalic acid and 3.1 % by weight of fluorescent yellow AA 216 (Holidays, Huthersfield, GB; C.I. Basic yellow 40).

Example 9: According to the process of example 2 fluorescent pink pigments are prepared from mixtures having the following compositions.

| | A | B | C |
|---|---|---|---|
| Benzoic acid | 8.1% | 24.9% | 10.5% |
| Isophorone diamine | 44.9% | 34.8% | 43.7% |
| Isophthalic acid | 43.9% | 33.9% | 42.7% |
| Flexo red 540 | 3.1% | 3.1% | 3.1% |
| Zinc oxide | - | 3.3% | - |

Example 10: Flake micronisation
The flakes recovered at the end of the belt from sample 9B above are fed into a mill of the air jet microniser type (Alpine 200 AFG, Augsburg). The particle size of the pigments obtained as analyzed by Sympatec Helos is given below.

| Velocity (rpm) | Flow (kg/h) | d₅₀ | d₉₇ | d₁₀ |
|---|---|---|---|---|
| 11000 | 48 | 2.4 | 7.5 | 0.9 |
| 8500 | 72 | 2.8 | 9.3 | 0.9 |
| 7800 | 100 | 3.0 | 10.4 | 0.9 |
| 5000 | 154 | 4.2 | 23.8 | 1.0 |

Example 11: Manufacture of coloured poyester resin flakes and their micronisation
According to the process of examples 2 and 3, but replacing the rhodamine B with 0.1 % by weight of the pigment produced of a diketo-pyrrolo-pyrrole of the formula I 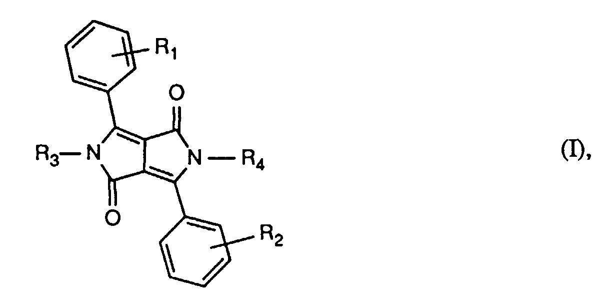 wherenin R₁-R₄ is hydrogen (prepared according to example 1 of US 4,579,949), a fluorescent yellow-orange pigment is prepared.

Example 12: Manufacture of coloured polyamide flakes and their micronisation
According to the process of example 4, a fluorescent yellow-orange pigment is prepared from a mixture having 35.3 % by weight of isophorone diamine, 34.5 % by weight of isophthalic acid, 26.85 % by weight of benzoic acid, 3.3 % by weight of zinc oxide and 0.05 % by weight of a colourant of formula I above, wherein R₁ and R₂ are 4-chloro and R₃ and R₄ are hydrogen (prepared according to example 6 of US 4,579,949).

Example 13: Batch preparation of coloured polyamide and the micronisation thereof
In a round bottom flask a mixture of 36 % isophorone diamine, 35 % of isophthalic acid, 25 % of benzoic acid, 3 % of zinc oxide and 1 % a colourant of formula I above, wherein R₁ and R₂ are hydrogen and R₃ and R₄ are methyl (prepared according to example 1 of US 4,585,878) is heated to 250°C, held at this temperature for 10 minutes, cooled to room temperature and micronised according to example 3 to form a orange-yellow fluorescent pigment.

Example 14: Manufacture of coloured polyamide flakes and their micronisation
A fluorescent orange-yellow pigment is prepared as described in example 4 but using a compound of formula I, wherein R₁ and R₂ are 4-tert-butyl and R₃ and R₄ are hydrogen as colourant (prepared according to example 20 of US 4,579,949), instead of the Hostasol® Yellow 3G..

Example 15: Manufacture of coloured polyamide flakes and their micronisation
A fluorescent yellow pigment is prepared as described in example 4 but using a compound of formula I, wherein R₁ and R₂ are 4-chloro and R₃ and R₄ are 4-chlorophenyl as colourant (prepared according to example 10 of US 4,579,949).

Examples 16 - 19: Manufacture of coloured polyester flakes and their micronisation
Examples 12 - 15 are repeated by using the mixture of phthalic anhydride and pentaerythritol described in example 2 as reactants for the preparation of the polycondensation resin.

Example 20: According to the process of examples 2 and 3 a fluorescent pink pigment is prepared from a mixture having 29.2 % by weight of glycerol, 69.8 % by weight of phthalic anhydride flakes and 1.0 % by weight of rhodamine B.

Example 21: Example 20 is repeated by substituting phthalic anhydride by an equivalent amount of butanedioic acid.

Example 22: According to the process of examples 2 and 3 a fluorescent pink pigment is prepared from a mixture having 29.2 % by weight of ethylene glycol, 69.8 % by weight of phthalic anhydride and 1 % by weight of rhodamine B.

Example 23: According to the process of examples 3 and 4 a blue pigment is prepared from a mixture having 14.9 % by weight of benzoic acid, 41.5 % by weight of isophorone diamine, 40.5 % by weight of isophthalic acid and 3.1 % by weight of Fliso Blue 630® (BASF AG).

Example 24: A blue pigment composition for coating paper is prepared from the following components:
25 parts of blue pigment prepared in example 23
25 parts of carbital 95®
25 parts of latex BASF SD 215®
25 parts of water
The composition can be used for coating paper.

Example 25: Preparation of a printing ink
A fluorescent pink ink is prepared from a mixture having 100 parts of binder (Ecocryl® 0254, W. SIPPO Co., Villers Saint Paul, France), 20 parts of a fixer (fixer 99HD®, W.SIPPO Co.), 10 parts of emulsifier (ATEPRINT E9183®, Dr. Th. BHOME, Germany), 820 parts of water and 20 parts of the pink pigment obtained in example 5. The fluorescent ink is used for application by the screen process (or any similar process) on cotton fabric, which is then heated (dry heat) for 3 minutes at 150°C.

Example 26: Manufacture of coloured polyamide flakes and their micronisation
According to the process of examples 2 and 3 a fluorescent pink pigment is prepared from a mixture of 44 % by weight of isophorone diamine, 27 % by weight of isophthalic acid, 25 % by weight of azelaic acid, 3 % by weight of ZnO and 1 % by weight of rhodamine B.

Example 27: Manufacture of coloured polyamide flakes and their micronisation
According to the process of examples 2 and 3 a fluorescent orange pigment is prepared from a mixture of 22 % by weight of isophorone diamine, 20 % by weight of 2-methyl-pentamethylenediamine, 29 % by weight of isophthalic acid, 25 % by weight of azelaic acid, 3 % by weight of ZnO and 1 % by weight of rhodamine 6G.

Example 28: Manufacture of coloured polyester flakes and their micronisation
According to the process of examples 2 and 3 a fluorescent yellow pigment is prepared from a mixture of 60 % by weight of phthalic anhydride, 31 % by weight of 1,4-cyclohexanedimethanol, 3 % by weight of ethylene glycol, 4 % by weight of glycerol and 2 % by weight Hostasol® Yellow 3G (Hoechst AG).

Example 29: Batch preparation of coloured polyamide flakes and micronisation thereof
According to the process of example 13 a fluorescent orange-yellow pigment is prepared from a mixture of 45 % by weight isophorone diamine, 28 % by weight of isophthalic acid, 25 % by weight of azelaic acid and 2 % by weight of the colourant in example 13, by heating the mixture to 270°C for 5 minutes.

Example 30: Batch preparation of coloured polyester flakes and micronisation thereof
According to the process of example 13 the following mixture is heated to 280°C for 15 minutes: 57 % by weight of terephthalic acid, 12 % by weight of ethylene glycol, 30 % by weight of 1,4-cyclohexanedimethanol and 1 % by weight of the colourant used in example 15 to produce a fluorescent yellow pigment.

Example 31: Batch preparation of coloured polyester flakes and micronisation thereof
According to the process of example 13 the following mixture is heated to 280°C for 5 minutes: 29.8 % by weight of terephthalic acid, 20 % by weight of isophthalic acid, 50 % by weight of 1,4-cyclohexanedimethanol and 0.2 % by weight of the colourant used in example 14 to produce a fluorescent orange-yellow pigment.

The above examples are given merely by way of illustration. Other devices and operating conditions can be employed by a person skilled in the art without departing from the continuous polymerisation process forming the subject of the present invention.

## Claims

1. A process for the manufacture of pigments comprising a coloured composition incorporated in a polycondensation resin, said resin not containing aldehyde derivatives, especially formaldehyde derivatives, wherein the reactants for the formation of said polycondensation resin and the coloured composition are introduced continuously into a reactor and are mixed, the mixture travels forward in the reactor and at the end of reaction the product is withdrawn continuously from the said reactor.

2. A process according to claim 1, wherein the reactor temperature is maintained between 190°C and 260°C.

3. A process according to any of claims 1 or 2, wherein the said mixture withdrawn from the reactor is deposited continuously onto a conveying device, broken up and cooled.

4. A process according to any of claims 1 to 3, wherein the said mixture withdrawn from the reactor is broken up into flakes.

5. A process according to claim 4, wherein the said flakes are micronised after cooling.

6. A process according to claim 5, wherein the said flakes are micronised to a particle size of between 0.5 and 20 µm and preferably to a mean particle size of between 3 and 7 µm.

7. A process according to any of claims 1 to 6, wherein the said reactor is an extruder.

8. A process according to claim 7, wherein the said extruder has at least one endless screw capable of propelling a pasty mixture.

9. A process according to any of claims 3 to 8, wherein the said conveying device is a conveyor belt which has means for cooling and means for detaching the said flakes from the said belt.

10. A process according to any of claims 1 to 9, wherein the said coloured composition comprises at least one substance which is fluorescent in daylight and the concentration of the said fluorescent substance is between 1 % and 5 % by weight of the pigments.

11. A process according to any of claims 1 to 10, wherein the said coloured composition comprises a substance which is fluorescent when it is excited by UV radiation, but which does not absorb in the visible spectrum.

12. A process according to any of claims 1 to 11, wherein said polycondensation resin is a polyester resin, a hybrid polyester resin, a polyamide resin, an epoxide resin or a polyurethane resin.

13. A process according to claim 12, wherein said polyester resin is a crosslinked polyester resin from aromatic polycarboxylic acids or their anhydrides and bifunctional or polyfunctional alcohols or wherein said polyester resin is a substantially crystalline thermoplastic opaque polyester resin prepared by reacting mixtures of linear monomers with branched or substituted monomers.

14. A process according to claim 12, wherein said polyamide resin is formed by the reaction of a polyfunctional amine with both a polycarboxylic acid and a monocarboxylic acid, said polyamide being in the molecular weight range from about 400 to about 2500 or wherein said polyamide resin is formed by reacting a diamine with an excess stoichiometric amount of a diacid.

15. A composition comprising a diketo-pyrrolo-pyrrole colourant and a polycondensation resin selected from the group of crosslinked polyester resins from aromatic polycarboxylic acids or their anhydrides and bifunctional or polyfunctional alcohols, polyester resins, which are substantially crystalline thermoplastic opaque polyester resins prepared by reacting mixtures of linear monomers with branched or substituted monomers, polyamide resins formed by the reaction of a polyfunctional amine with both a polycarboxylic acid and a monocarboxylic acid, said polyamide being in the molecular weight range from about 400 to about 2500 and polyamide resins which are formed by reacting a diamine with an excess stoichiometric amount of diacid, said composition having a particle size of between 0.5 and 20 µm and preferably a mean particle size of between 3 and 7 µm.

16. A composition according to claim 15, wherein the diketo-pyrrolo-pyrrole colourants are compounds of the formula I 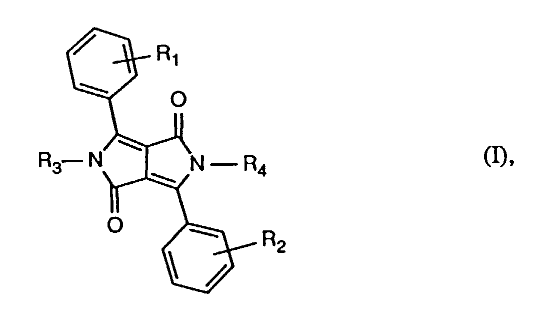 wherein R₁ and R₂ independently of one another are hydrogen, C₁-C₁₈alkyl, C₁-C₄alkoxy, phenyl, cyano or halogen and R₃ and R₄ independently of one another are hydrogen, C₁-C₁₈alkyl, C₃-C₁₂alkenyl, C₃-C₅alkinyl, C₂-C₅alkoxycarbonyl, carbamoyl, C₂-C₁₃alkylC₁-C₄alkoxycarbonyl, phenyl or phenyl substituted by chlorine, bromine, C₁-C₄alkyl, C₁-C₄alkoxy, trifluoromethyl or nitro.

## Patentansprüche

1. Verfahren zur Herstellung von Pigmenten, umfassend eine gefärbte Zusammensetzung, eingearbeitet in ein keine Aldehydderivate, insbesondere Formaldehydderivate, enthaltendes Polykondensationsharz, wobei die Reaktanten zur Bildung des Polykondensationsharzes und der gefärbten Zusammensetzung kontinuierlich in einen Reaktor eingeführt und vermischt werden, das Gemisch sich in dem Reaktor vorwärts bewegt und am Reaktionsende das Produkt kontinuierlich aus dem Reaktor entnommen wird.

2. Verfahren nach Anspruch 1, wobei die Reaktortemperatur zwischen 190°C und 260°C gehalten wird.

3. Verfahren nach einem der Ansprüche 1 oder 2, wobei das aus dem Reaktor entnommene Gemisch kontinuierlich auf eine Transportvorrichtung abgelegt, zerkleinert und gekühlt wird.

4. Verfahren nach einem der Ansprüche 1 bis 3, wobei das aus dem Reaktor entnommene Gemisch zu Flocken zerkleinert wird.

5. Verfahren nach Anspruch 4, wobei die Flocken nach Abkühlen mikronisiert werden.

6. Verfahren nach Anspruch 5, wobei die Flocken zu einer Teilchengröße zwischen 0,5 und 20 µm und vorzugsweise zu einer mittleren Teilchengröße zwischen 3 und 7 µm mikronisiert werden.

7. Verfahren nach einem der Ansprüche 1 bis 6, wobei der Reaktor ein Extruder ist.

8. Verfahren nach Anspruch 7, wobei der Extruder mindestens eine Endlosschnecke aufweist, die in der Lage ist, ein pastöses Gemisch vorwärts zu bewegen.

9. Verfahren nach einem der Ansprüche 3 bis 8, wobei die Transportvorrichtung ein Transportband ist, das eine Kühlvorrichtung und eine Vorrichtung zum Ablösen der Flocken von dem Band aufweist.

10. Verfahren nach einem der Ansprüche 1 bis 9, wobei die gefärbte Zusammensetzung mindestens einen Stoff umfaßt, der bei Tageslicht fluoresziert und die Konzentration des fluoreszierenden Stoffs zwischen 1% und 5 Gew.-% des Pigments beträgt.

11. Verfahren nach einem der Ansprüche 1 bis 10, wobei die gefärbte Zusammensetzung einen Stoff umfaßt, der bei Anregung mit UV-Strahlen fluoresziert, der jedoch nicht im sichtbaren Spektrum absorbiert.

12. Verfahren nach einem der Ansprüche 1 bis 11, wobei das Polykondensationsharz ein Polyesterharz, ein Hybridpolyesterharz, ein Polyamidharz, ein Epoxidharz oder ein Polyurethanharz ist.

13. Verfahren nach Anspruch 12, wobei das Polyesterharz ein vernetztes Polyesterharz aus aromatischen Polycarbonsäuren oder deren Anhydriden und bifunktionellen oder polyfunktionellen Alkoholen ist oder wobei das Polyesterharz ein durch Umsetzung von Gemischen aus linearen Monomeren mit verzweigten oder substituierten Monomeren hergestelltes, im wesentlichen kristallines, thermoplastisches, undurchsichtiges Polyesterharz ist.

14. Verfahren nach Anspruch 12, wobei das Polyamidharz durch Umsetzung eines polyfunktionellen Amins mit sowohl einer Polycarbonsäure als auch einer Monocarbonsäure gebildet wird, wobei das Polyamid im Molekulargewichtsbereich von etwa 400 bis etwa 2500 liegt oder wobei das Polyamidharz durch Umsetzung eines Diamins mit einer stöchiometrischen Überschußmenge einer Disäure gebildet wird.

15. Zusammensetzung, umfassend ein Diketopyrrolopyrrolfärbemittel und ein Polykondensationsharz, ausgewählt aus der Gruppe vernetzter Polyesterharze aus aromatischen Polycarbonsäuren oder deren Anhydriden und bifunktionellen oder polyfunktionellen Alkoholen, Polyesterharze, die durch Umsetzung von Gemischen aus linearen Monomeren mit verzweigten oder substituierten Monomeren hergestellte, im wesentlichen kristalline, thermoplastische, undurchsichtige Polyesterharze sind, Polyamidharze, gebildet durch Umsetzung eines polyfunktionellen Amins mit sowohl einer Polycarbonsäure als auch einer Monocarbonsäure, wobei das Polyamid im Molekulargewichtsbereich von etwa 400 bis etwa 2500 liegt und den Polyamidharzen, die durch Umsetzung eines Diamins mit einer stöchiometrischen Überschußmenge an Disäure gebildet werden, wobei die Zusammensetzung eine Teilchengröße zwischen 0,5 und 20 µm und vorzugsweise eine durchschnittliche Teilchengröße zwischen 3 und 7 µm aufweist.

16. Zusammensetzung nach Anspruch 15, wobei die Diketopyrrolopyrrolfärbemittel Verbindungen der Formel I sind 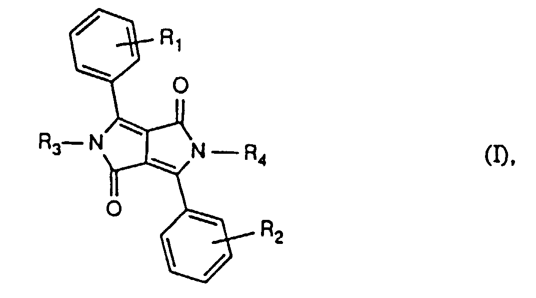 worin R₁ und R₂ unabhängig voneinander Wasserstoff, C₁-C₁₈-Alkyl, C₁-C₄-Alkoxy, Phenyl, Cyano oder Halogen darstellen und R₃ und R₄ unabhängig voneinander Wasserstoff, C₁-C₁₈-Alkyl, C₃-C₁₂-Alkenyl, C₃-C₅-Alkinyl, C₂-C₅-Alkoxycarbonyl, Carbamoyl, C₂-C₁₃-Alkyl-C₁-C₄-alkoxycarbonyl, Phenyl oder Phenyl, substituiert mit Chlor, Brom, C₁-C₄-Alkyl, C₁-C₄-Alkoxy, Trifluormethyl oder Nitro, sind.

## Revendications

1. Un procédé pour la fabrication de pigments comprenant une composition colorée incorporée à une résine de polycondensation, ladite résine ne contenant pas de dérivés d'aldéhyde, notamment de dérivés de formaldéhyde, dans lequel les corps réagissants pour la formation de ladite résine de polycondensation et la composition colorée sont introduits en continu dans un réacteur et sont mélangés, le mélange avance dans le réacteur et, à la fin de la réaction, le produit est retiré en continu dudit réacteur.

2. Un procédé selon la revendication 1, dans lequel la température du réacteur est maintenue entre 190°C et 260°C.

3. Un procédé selon l'une quelconque des revendications 1 ou 2, dans lequel ledit mélange retiré du réacteur est déposé en continu sur un dispositif de transport, fragmenté et refroidi.

4. Un procédé selon l'une quelconque des revendications 1 à 3, dans lequel ledit mélange retiré du réacteur est fragmenté en paillettes.

5. Un procédé selon la revendication 4, dans lequel lesdites paillettes sont micronisées après refroidissement.

6. Un procédé selon la revendication 5, dans lequel lesdites paillettes sont micronisées à une taille de particules comprise entre 0,5 et 20 µm et de préférence à une taille moyenne de particules comprise entre 3 et 7 µm.

7. Un procédé selon l'une quelconque des revendications 1 à 6, dans lequel ledit réacteur est une extrudeuse.

8. Un procédé selon la revendication 7, dans lequel ladite extrudeuse comporte au moins une vis sans fin capable de faire avancer un mélange pâteux.

9. Un procédé selon l'une quelconque des revendications 3 à 8, dans lequel ledit dispositif de transport est une courroie transporteuse comportant un moyen de refroidissement et un moyen pour détacher lesdites paillettes de ladite courroie.

10. Un procédé selon l'une quelconque des revendications 1 à 9, dans lequel ladite composition colorée comprend au moins une substance qui est fluorescente à la lumière du jour et la concentration de ladite substance fluorescente est comprise entre 1 % et 5 % du poids des pigments.

11. Un procédé selon l'une quelconque des revendications 1 à 10, dans lequel ladite composition colorée comprend une substance qui est fluorescente lorsqu'elle est excitée par rayonnement UV, mais qui n'absorbe pas dans le spectre visible.

12. Un procédé selon l'une quelconque des revendications 1 à 11, dans lequel ladite résine de polycondensation est une résine polyester, une résine polyester hybride, une résine polyamide, une résine époxy ou une résine polyuréthanne.

13. Un procédé selon la revendication 12, dans lequel ladite résine polyester est une résine polyester réticulée produite à partir d'acides polycarboxyliques aromatiques ou de leurs anhydrides et d'alcools bifonctionnels ou polyfonctionnels, ou dans lequel ladite résine polyester est une résine polyester thermoplastique opaque sensiblement cristalline préparée en faisant réagir des mélanges de monomères linéaires avec des monomères ramifiés ou substitués.

14. Un procédé selon la revendication 12, dans lequel ladite résine polyamide est formée par la réaction d'une amine polyfonctionnelle avec à la fois un acide polycarboxylique et un acide monocarboxylique, ledit polyamide entrant dans l'intervalle de poids moléculaire d'environ 400 à environ 2500, ou dans lequel ladite résine polyamide est formée en faisant réagir une diamine avec un excès stoechiométrique d'un diacide.

15. Une composition comprenant un colorant du type dicétopyrrolopyrrole et une résine de polycondensation choisie dans le groupe formé par les résines polyesters réticulées produites à partir d'acides polycarboxyliques aromatiques ou de leurs anhydrides et d'alcools bifonctionnels ou polyfonctionnels, les résines polyesters qui sont des résines polyesters thermoplastiques opaques sensiblement cristallines préparées en faisant réagir des mélanges de monomères linéaires avec des monomères ramifiés ou substitués, les résines polyamides formées par la réaction d'une amine polyfonctionnelle avec à la fois un acide polycarboxylique et un acide monocarboxylique, ledit polyamide entrant dans l'intervalle de poids moléculaire d'environ 400 à environ 2500, et les résines polyamides qui sont formées en faisant réagir une diamine avec un excès stoechiométrique de diacide, ladite composition ayant une taille de particules comprise entre 0,5 et 20 µm, et de préférence une taille moyenne de particules comprise entre 3 et 7 µm.

16. Une composition selon la revendication 15, dans laquelle les colorants du type dicétopyrrolopyrrole sont des composés de formule I 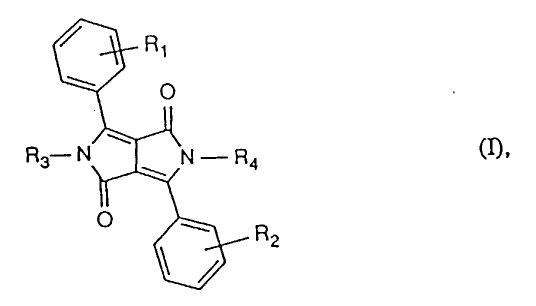 où R₁ et R₂ sont chacun, indépendamment de l'autre, l'hydrogène, un groupe alkyle en C₁-C₁₈, un groupe alcoxy en C₁-C₄, un groupe phényle, un groupe cyano ou un halogène, et R₃ et R₄ sont chacun, indépendamment de l'autre, l'hydrogène, un groupe alkyle en C₁-C₁₈, un groupe alcényle en C₃-C₁₂, un groupe alcynyle en C₃-C₅, un groupe alcoxycarbonyle en C₂-C₅, un groupe carbamoyle, un groupe (alkyle en C₂-C₁₃)-(alcoxy en C₁-C₄)carbonyle, un groupe phényle ou un groupe phényle substitué par un ou plusieurs substituants chloro, bromo, alkyle en C₁-C₄, alcoxy en C₁-C₄, trifluorométhyle ou nitro.
